# EUROPEAN PATENT APPLICATION

(11) **EP 3 046 360 A1**
(43) Date of publication of application: **20.07.2016**
(21) Application number: 13893502.8
(22) Date of filing: 13.09.2013
(51) Int. Cl.: H04W 24/10

(54) **METHOD, BASE STATION, AND USER EQUIPMENT FOR CHANGING CELL CLUSTERS**

(71) Applicant: Fujitsu Limited, Kawasaki-shi, Kanagawa 211-8588 (JP)
(72) Inventor: ZHANG, Lei, Beijing 100025 (CN); WANG, Weiwei, Beijing 100025 (CN); ZHOU, Hua, Beijing 100025 (CN)
(74) Representative: Lewin, David Nicholas
(86) International application number: PCT/CN2013/083481
(87) International publication number: WO 2015/035613

(57) **Abstract**

A method for changing a cell cluster, a base station and a user equipment. The method includes: a base station of a cell causes the cell to join in a cell cluster, or leave a cell cluster to which the cell belongs, or change a cell cluster to which the cell belongs into another cell cluster, according to indication information received from a network side controller. It can be seen from the embodiments that by a cell joining in a cell cluster, or leaving from a cell cluster, or changing from one cell cluster into another cell cluster, the cell cluster may be dynamically changed, hence advantages may be obtained by an enhancement mechanism in the cell cluster.

## Description

### Technical Field

The present disclosure relates to the field of communications, and in particular to a method for changing a cell cluster, a base station and a user equipment.

### Background

As rapid increase of amount of demand for mobile data traffics, how to evolve the existing mobile communication networks and develop new technologies to support so rapidly increased traffics have become one of the concerns in the field of mobile communications.

In existing possible solutions, one solution is to use small cells to increase physical resource utilization. Furthermore, on a premise of identical covering areas, replacing a macro cell with multiple small cells may also efficiently save power overhead. Small cells are green technologies saving more energy. And at the same time, small cells facilitate flexible deployment, and may be flexibly opened and closed depending on an amount of users and an amount of traffic data.

A method of densely deployed small cells is to divide the small cells into cell clusters. Such division may be fixed by the operator in the deployment of the small cells, and may also be constituted by the small cells on their own according to certain conditions. Grouping the small cells is advantageous to interference coordination and optimization of handover of a UE.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

However, in the same hot spot area, amounts of demands for traffics in different time periods are largely different from each other. For example, in a commercial or office area, multiple user equipments (UEs) in the daytime is in need of access to the network and generates a large amount of demands for data; while in the nighttime, the number of UEs in these areas drops rapidly. Small cells deployed in the same area may be fully opened in an exuberant demand, and this is dense deployment. If grouping of small cells is fixed by the operator in the deployment, when only several small cells in a small cell cluster are opened, gains obtained by an enhancement mechanism (such as interference coordination and optimization of handover of a UE) in the small cell cluster are very limited. Better gains may only be obtained when a majority of the cells in the small cell cluster are in an opened state.

Embodiments of the present disclosure provide a method for changing a cell cluster, a base station and a user equipment, in which the cell cluster is made to change dynamically, and advantages may be obtained by an enhancement mechanism in the small cell cluster in more cases.

According to a first aspect of the embodiments of the present disclosure, there is provided a method for changing a cell cluster, including:
causing, by a base station of a cell, the cell to join in a cell cluster, or leave a cell cluster to which the cell belongs, or change a cell cluster to which the cell belongs into another cell cluster, according to indication information received from a network side controller.

According to a second aspect of the embodiments of the present disclosure, there is provided a method for changing a cell cluster, including:
sending, by an network side controller, indication information to a base station of a cell, the indication information indicating the cell to join in a cell cluster, or leave a cell cluster to which the cell belongs, or change a cell cluster to which the cell belongs into another cell cluster.

According to a third aspect of the embodiments of the present disclosure, there is provided a method for changing a cell cluster, including:
sending, by a base station of a cell, a message to an network side controller or a target cell, the message indicating that the cell requests to join in and/or leave a cell cluster to which the target cell belongs; wherein, the target cell includes one or more cell(s) in the cell cluster to be joined in by the cell, and/or other one or more cell(s) in the cell cluster to be left by the cell; and
causing, by the base station of the cell, the cell to join in and/or leave the cell cluster to which the target cell belongs, after sending the message or receiving a confirmation permission message from the target cell.

According to a fourth aspect of the embodiments of the present disclosure, there is provided a method for changing a cell cluster, including:
receiving, by a target cell, a message sent by a base station of a cell, the message indicating that the cell requests to join in and/or leave a cell cluster to which the target cell belongs; wherein, the target cell includes one or more cell(s) in the cell cluster to be joined in by the cell, and/or other one or more cell(s) in the cell cluster to be left by the cell.

According to a fifth aspect of the embodiments of the present disclosure, there is provided a method for changing a cell cluster, including:
receiving, by a neighbor cell of a cell or other cell in a cell cluster to which the cell belongs, a message sent by a base station of the cell or a base station of a target cell, the message indicating that the cell cluster to which the cell belongs is changed; wherein the target cell includes one or more cell(s) in a cell cluster to be joined in by the cell, and/or other one or more cell(s) in a cell cluster to be left by the cell; the cell cluster to which the cell belongs includes a cell cluster having been or to be left, and/or a cell cluster joined in by the cell; and
notifying, by the neighbor cell or the other cell, neighbor cell(s) or other cell(s) in the cell cluster to which the other cell belongs, that the cell leaves and/or joins the cell cluster, and/or the situation of a change of the cell cluster where the cell is located.

According to a sixth aspect of the embodiments of the present disclosure, there is provided a method for receiving information, including:
receiving, by a UE, indication information sent by a base station of a cell when a cell cluster to which the cell belongs is changed, the indication information indicating that a cell identity and/or a related uplink and/or downlink transmission signal is/are changed; the indication information including the changed cell identity, and/or time of changing the cell identity and/or the related uplink and/or downlink transmission signal; and
receiving system information, and/or a common signal, and/or a downlink control signal sent by the base station of the cell, and/or changing a scrambling sequence or a reference signal sequence related to the cell identity in an uplink signal of the UE, by using the changed cell identity at the time indicated by the indication information.

According to a seventh aspect of the embodiments of the present disclosure, there is provided a method for receiving information, including:
receiving, by a UE being handed over from a cell to other cell, assistance information sent from a base station of the other cell to the UE when a cell cluster to which the cell belongs is changed, the assistance information indicating that the UE can use the timing of the cell with the cell identity not being changed, and/or indicating that the UE can handover to the cell with cell identity being changed in a random access process by using an original cell radio network temporary identity; or
the assistance information indicating that the UE can use the timing of the cell with the cell identity not being changed, the UE can handover to the cell with the cell identity being changed in the random access process by using the original cell radio network temporary identity, and the UE can directly access the cell with the cell identity being changed without performing random access.

According to an eighth aspect of the embodiments of the present disclosure, there is provided a base station, including:
a processing unit configured to cause a cell to join in a cell cluster, or leave a cell cluster to which the cell belongs, or change a cell cluster to which the cell belongs into another cell cluster, according to indication information received from an network side controller.

According to a ninth aspect of the embodiments of the present disclosure, there is provided a controller, including:
an information sending unit configured to send indication information to a base station of a cell, the indication information indicating the cell to join in a cell cluster, or leave a cell cluster to which the cell belongs, or change a cell cluster to which the cell belongs into another cell cluster.

According to a tenth aspect of the embodiments of the present disclosure, there is provided a base station, including:
a first sending unit configured to send a message to a target cell or an network side controller, the message indicating that a cell to which the base station belongs requests to join in and/or leave a cell cluster to which the target cell belongs; wherein, the target cell includes one or more cell(s) in the cell cluster to be joined in by the cell, and/or other one or more cell(s) in the cell cluster to be left by the cell; and
a first processing unit configured to cause the cell to join in and/or leave the cell cluster to which the target cell belongs, after the message is sent or a confirmation permission message is received from the target cell.

According to an eleventh aspect of the embodiments of the present disclosure, there is provided a base station, including:
a receiving unit configured to receive a message sent by a base station of a cell, the message indicating that the cell requests to join in and/or leave a cell cluster to which the target cell belongs; wherein the target cell includes one or more cell(s) in the cell cluster to be joined in by the cell, and/or other one or more cell(s) in the cell cluster to be left by the cell.

According to a twelfth aspect of the embodiments of the present disclosure, there is provided a base station, including:
a first receiving unit configured to receive a message sent by a base station of the cell or a base station of a target cell, the message indicating that a cell cluster to which the cell belongs is changed; wherein the target cell includes one or more cell(s) in a cell cluster to be joined in by the cell, and/or other one or more cell(s) in a cell cluster to be left by the cell; the cell cluster to which the cell belongs includes a cell cluster having been or to be left, and/or a cell cluster joined in by the cell; and
a first notifying unit configured to notify a cell to which the base station belongs, that the cell leaves and/or joins in the cell cluster, and/or the situation of a change of the cell cluster to which the cell belongs.

According to a thirteenth aspect of the embodiments of the present disclosure, there is provided a UE, including:
a second receiving unit configured to receive indication information sent by a base station of a cell when a cell cluster to which the cell belongs is changed, the indication information indicating that a cell identity and/or a related uplink and/or downlink transmission signal is/are changed; the indication information including the changed cell identity, and/or time of changing the cell identity and/or the related uplink and/or downlink transmission signal;
a sixth sending unit configured to send system information, and/or a common signal, and/or a downlink control signal sent by the base station of the cell, and/or change a scrambling sequence or a reference signal sequence related to the cell identity in an uplink signal of the UE, by using the changed cell identity at the time indicated by the indication information.

According to a fourteenth aspect of the embodiments of the present disclosure, there is provided a UE, including:
a third receiving unit configured to receive assistance information sent from a base station of other cell to the UE when a cell cluster where a cell to which the UE belongs is located is changed and the UE is handed over from the cell to the other cell, the assistance information indicating that the UE can use the timing of the cell with its cell identity not being changed and/or indicating that the UE can handover to the cell with the cell identity being changed in a random access process by using an original cell radio network temporary identity;
or the assistance information indicating that the UE can use the timing of the cell with the cell identity not being changed, the UE can handover to the cell with the cell identity being changed in the random access process by using the original cell radio network temporary identity, and the UE can directly access the cell with the cell identity being changed without performing random access.

According to a fifteenth aspect of the embodiments of the present disclosure, there is provided a computer-readable program, wherein when being executed in a base station, the program enables a computer to carry out the method for changing a cell cluster as described in the first, third, fourth and fifth aspects of the embodiments in the base station.

According to a sixteenth aspect of the embodiments of the present disclosure, there is provided a storage medium which stores a computer readable program, wherein the computer readable program enables a computer to carry out the method for changing a cell cluster as described in the first, third, fourth and fifth aspects of the embodiments in a base station.

According to a seventeenth aspect of the embodiments of the present disclosure, there is provided a computer-readable program, wherein when being executed in a UE, the program enables a computer to carry out the method for receiving information as described in the sixth and seventh aspects of the embodiments in the UE.

According to an eighteenth aspect of the embodiments of the present disclosure, there is provided a storage medium which stores a computer readable program, wherein the computer readable program enables a computer to carry out the method for receiving information as described in the sixth and seventh aspects of the embodiments in a UE.

According to a nineteenth aspect of the embodiments of the present disclosure, there is provided a computer-readable program, wherein when being executed in a controller, the program enables a computer to carry out the method for changing a cell cluster as described in the second aspect of the embodiments in the controller.

According to a twentieth aspect of the embodiments of the present disclosure, there is provided a storage medium which stores a computer readable program, wherein the computer readable program enables a computer to carry out the method for changing a cell cluster as described in the second aspect of the embodiments in a controller.

An advantage of the embodiments of the present disclosure exists in that by configuration of the network side or requesting a target cell, the base station of the cell causes the cell to join in a cell cluster, or leave a cell cluster to which the cell belongs, or change the cell cluster to which the cell belongs into another cell cluster, so that the cell cluster dynamically changes, thereby obtaining advantages by an enhancement mechanism in the cell cluster.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present disclosure, which constitute a part of the specification and illustrate the preferred embodiments of the present disclosure, and are used for setting forth the principles of the present disclosure together with the description. It is obvious that the drawings in the following description are only some embodiments of the present disclosure. And other drawings may be obtained by those skilled in the art according to these drawings without making an inventive effort. In the drawings:
FIG. 1 is a flowchart of the method for changing a cell cluster of Embodiment 1 of the present disclosure;
FIG. 2 is a flowchart of the method for changing a cell cluster of Embodiment 2 of the present disclosure;
FIGs. 3A and 3B are flowcharts of the method for changing a cell cluster of Embodiment 3 of the present disclosure;
FIG. 4 is a flowchart of the method for changing a cell cluster of Embodiment 4 of the present disclosure;
FIG. 5 is a flowchart of the method for changing a cell cluster of Embodiment 6 of the present disclosure;
FIG. 6 is a flowchart of the method for changing a cell cluster of Embodiment 7 of the present disclosure;
FIGs. 7A and 7B are flowcharts of the method for changing a cell cluster of Embodiment 8 of the present disclosure;
FIG. 8 is a flowchart of the method for changing a cell cluster of Embodiment 10 of the present disclosure;
FIG. 9 is a flowchart of the method for changing a cell cluster of Embodiment 13 of the present disclosure;
FIG. 10 is a schematic diagram of a structure of the base station of Embodiment 14 of the present disclosure;
FIG. 11 is a schematic diagram of a structure of the base station of Embodiment 14 of the present disclosure;
FIG. 12 is a schematic diagram of a structure of the controller of Embodiment 15 of the present disclosure;
FIG. 13 is a schematic diagram of a structure of the base station of Embodiment 17 of the present disclosure;
FIG. 14 is a schematic diagram of a structure of the base station of Embodiment 19 of the present disclosure;
FIG. 15 is a schematic diagram of a structure of the UE of Embodiment 23 of the present disclosure; and
FIG. 16 is a schematic diagram of a structure of the UE of Embodiment 23 of the present disclosure.

### Detailed Description

Various embodiments of the present disclosure shall be described below with reference to the drawings. These embodiments are illustrative only, and are not intended to limit the present disclosure.

In the embodiments of the present disclosure, cells may constitute cell clusters according to configuration of a network side or on their own. Each cell may join in a cell cluster or leave a cell cluster. When only several cells in an area are in an opened state, these cells may constitute a cell cluster. As the increase of the number of opened cells, when the number of cells in a cell cluster reaches a certain extent, a larger cell cluster may be split into several small cell clusters. And as the decrease of the number of opened cells, when the number of cells in a cell cluster drops to a certain extent, several cell clusters may be combined into one cell cluster. In this way, by dynamic changes of cell clusters, advantages may be obtained by an enhancement mechanism in the cell clusters in more cases.

The cells may be small cells, but it is not limited thereto. The method for changing a cell cluster of the embodiments of the present disclosure shall be described in detail with reference to the accompanying drawings.

### Embodiment 1

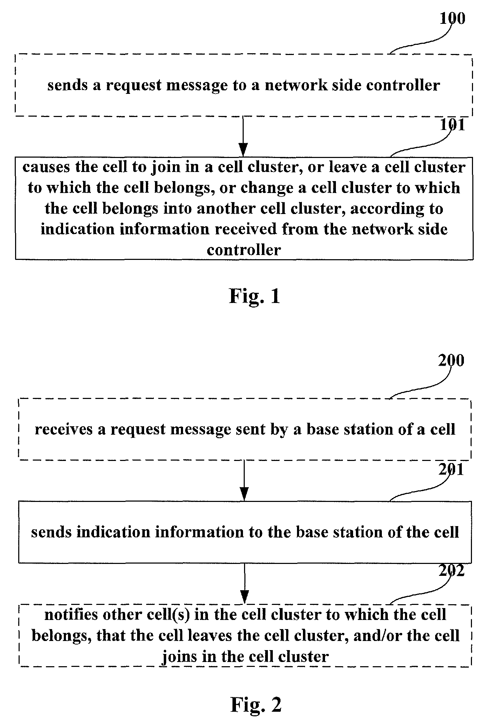

FIG. 1 is a flowchart of the method for changing a cell cluster of Embodiment 1 of the present disclosure. As shown in FIG. 1, the method includes:
step 101: a base station of a cell causes the cell to join in a cell cluster, or leave a cell cluster to which the cell belongs, or change the cell cluster to which the cell belongs into another cell cluster, according to indication information received from a network side controller.

It can be seen from the above embodiment that a cell may join in a cell cluster, or leave a cell cluster, or change from one cell cluster into another cell cluster, according to configuration of a network side, which makes the cell change dynamically. Hence, advantages may be obtained by an enhancement mechanism in the cell clusters, such as performing inter-cell interference coordination and suppression, so as to achieve increase of throughput of the UE and/or the network.

In this embodiment, changing of cell from the cell cluster to which the cell belongs to the other cell cluster is achieved by configuring that the cell leaves a current cell cluster and joins in another cell cluster at the same time.

In this embodiment, the cell may be a small cell, but it is not limited thereto. And following description is given taking that the cell is a small cell as an example.

In this embodiment, the network side controller may be a macro base station, which is responsible for scheduling and coordinating small cells within its coverage to constitute cell clusters, leave or join in a cell cluster, or change from one cell cluster into another cell cluster. However, it is not limited to a macro base station, and the network side controller may also be a core network, or another physical entity, that is, really-existed physical equipment, which is specifically used for controlling, coordinating and changing the above cell clusters.

In this embodiment, when the network side controller is a macro base station, interaction between the controller and the cell may be performed via an X2 interface or an Xn interface; when the network side controller is a core network, interaction between the controller and the cell may be performed via an S1 interface; and when the network side controller is a physical equipment specifically used for controlling cell clusters, a new interface may be defined, and interaction between the controller and the cell may be performed via the interface.

In this embodiment, before step 101, the method may further include:
step 100: the base station of the cell sends a request message to the network side controller, the request message indicating that the cell requests to join in the cell cluster, or leave the cell cluster to which the cell belongs, or change the cell cluster to which the cell belongs into the other cell cluster.

When the network side controller receives the request message, it may first determine according to the request message whether the cell is to join in a cell cluster, or leave a cell cluster to which the cell belongs, or change from the cell cluster to which the cell belongs into the other cell cluster, and then feed back a message to the base station of the cell, the message carrying related indication information, such as indicating the cell to join in a cell cluster, or leave a cell cluster to which the cell belongs, or change from the cell cluster to which the cell belongs into another cell cluster. Hence, in step 101, the base station of the cell may act according to the indication information in the message fed back by the network side controller.

In this embodiment, step 100 is optional, and the base station of the cell may also not send a request message, but may act directly according to the configuration of the network side controller.

### Embodiment 2

FIG. 2 is a flowchart of the method for changing a cell cluster of Embodiment 2 of the present disclosure. As shown in FIG. 2, the method includes:
step 201: an network side controller sends indication information to a base station of a cell, the indication information indicating the cell to join in a cell cluster, or leave the cell cluster to which the cell belongs, or change the cell cluster to which the cell belongs into another cell cluster.

In this embodiment, the network side controller may determine whether the cell is to join in a cell cluster, or leave a cell cluster, or change from a cell cluster into another cell cluster, and then send indication information to the base station of the cell according to a result of determination. In this way, the base station of the cell, according to the indication information, causes the cell to join in a cell cluster, or leave a cell cluster to which the cell belongs, or change from the cell cluster to which the cell belongs into the other cell cluster.

In this embodiment, the above network side controller may be a macro base station, a core network, or a physical entity, that is, really-existed physical equipment, which is specifically used for controlling the cell clusters, which is as described in Embodiment 1, and shall not be described herein any further.

In this embodiment, in a case where the cell changes from the cell cluster to which the cell belongs into the other cell cluster, it is needed to configure that it leaves the existing cell cluster and joins in the other cell cluster at the same time.

In this embodiment, in a case where the base station of the cell sends a request message, as shown in FIG. 2, the method may further includes:
step 200: receives a request message sent by the base station of the cell, the request message indicating that the cell requests to join in a cell cluster, or leave a cell cluster to which the cell belongs, or change from the cell cluster to which the cell belongs into another cell cluster.

And in step 201, the network side controller sends the indication information to the base station of the cell according to the request message. In this embodiment, after the cell joins in a cell cluster, or leaves the cell cluster to which the cell belongs, or changes from the cell cluster to which the cell belongs into the other cell cluster, the method may further include:
step 202: the network side controller notifies other cell(s) in the cell cluster to which the cell belongs, that the cell leaves the cell cluster, and/or the cell joins in the cell cluster;
when the cell joins in a cell cluster, the cell cluster to which the cell belongs refers to the cell cluster in which the cell joins; when the cell leaves the cell cluster to which the cell belongs, the cell cluster to which the cell belongs refers to the cell cluster the cell leaves or is to leave; and when the cell changes from a cell cluster into another cell cluster, the cell cluster to which the cell belongs refers to the cell cluster the cell has left and the cell cluster in which the cell joins.

### Embodiment 3

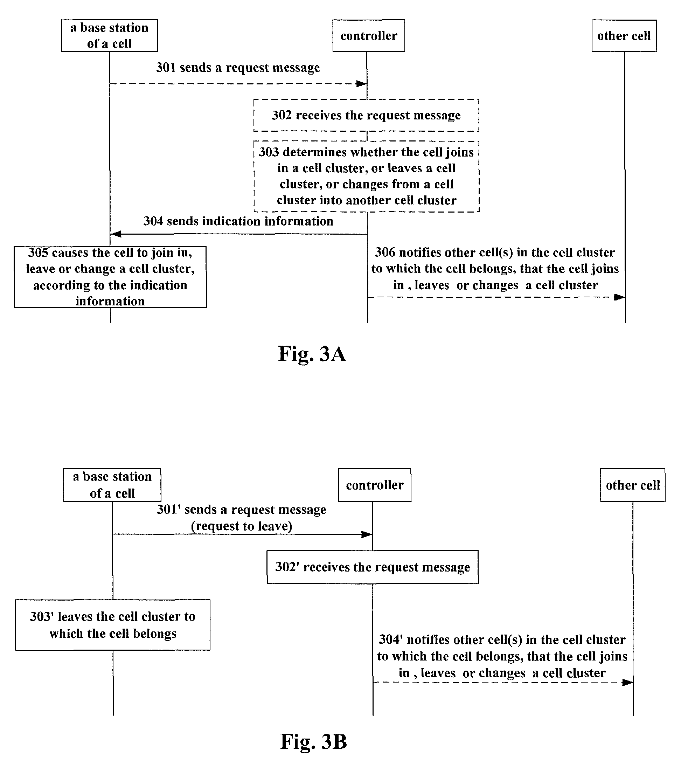

FIG. 3A is a flowchart of the method for changing a cell cluster of Embodiment 3 of the present disclosure. As shown in FIG. 3A, the method includes:
step 301: a base station of a cell sends a request message to an network side controller, the message indicating that the cell requests to join in a cell cluster, or request to leave a cell cluster to which the cell belongs, or request to change from a cell cluster into another cell cluster;
   in this embodiment, by requesting to join in, leave or change into another cell cluster, the cell is caused to change dynamically; and the controller is a macro base station; however, it is not limited thereto, and may also be a core network or a physical entity at the network side;
   in this embodiment, when the cell changes from a cell cluster into another cell cluster, the cell requests to leave a cell and join in another cell at the same time;
step 302: the network side controller receives the request message sent by the cell;
step 303: the network side controller determines whether the cell joins in a cell cluster, or leaves a cell cluster, or changes from a cell cluster into another cell cluster, according to the request message;
   in this embodiment, the controller may determine according to an actual situation whether the cell joins in a cell cluster, leaves a cell cluster or changes from a cell cluster into another cell cluster;
step 304: the network side controller sends indication information to the base station of the cell, indicating the cell joins in a cell cluster, leaves a cell cluster or changes from a cell cluster into another cell cluster;
step 305: the base station of the cell causes the cell to join in a cell cluster, leave a cell cluster or change from a cell cluster into another cell cluster, according to the indication information notified by the network side controller; and
step 306: the network side controller notifies other cell(s) in the cell cluster to which the cell belongs, that the cell joins in the cell cluster, leaves the cell cluster, or changes from a cell cluster into another cell cluster;
the cell cluster changes due to joining, leaving or changing of the cell; hence, the base station of the cell notifies the other cell(s) in the cell cluster to which the cell belongs that the cell joins in the cell cluster, or leaves the cell cluster; and changing the cell cluster refers to that the cell leaves a cell cluster and joins in another cell cluster at the same time; details are as described in Embodiment 2, which shall not be described herein any further.

In this embodiment, steps 301 and 302 are optional, and step 303 is also optional, that is, the controller may directly configure according to the request message, without determination; furthermore, step 306 may also be optional. Following description is given taking that the cell leaves a cell cluster as an example.

FIG. 3B is a flowchart of the method for changing a cell cluster of Embodiment 3 of the present disclosure. As shown in FIG. 3B, the method includes:
step 301': the base station of the cell sends a request message to the network side controller, the message indicating the cell to request to leave a cell cluster to which the cell belongs;
step 302': the network side controller receives the request message sent by the cell;
step 303': the base station of the cell leaves the cell cluster to which the cell belongs; and
step 304': the network side controller notifies other cell(s) in the cell cluster to which the cell belongs, that the cell leaves the cell cluster to which the cell belongs.

In this embodiment, the network side controller may not configure, and the base station of the cell leaves the cell cluster to which the cell belongs on its own. Step 304' may be optional.

The above embodiment is described taking that the cell leaves the cell cluster as an example, and cases of joining in a cell cluster and changing a cell cluster are similar to the above embodiment, which shall not be described herein any further.

### Embodiment 4

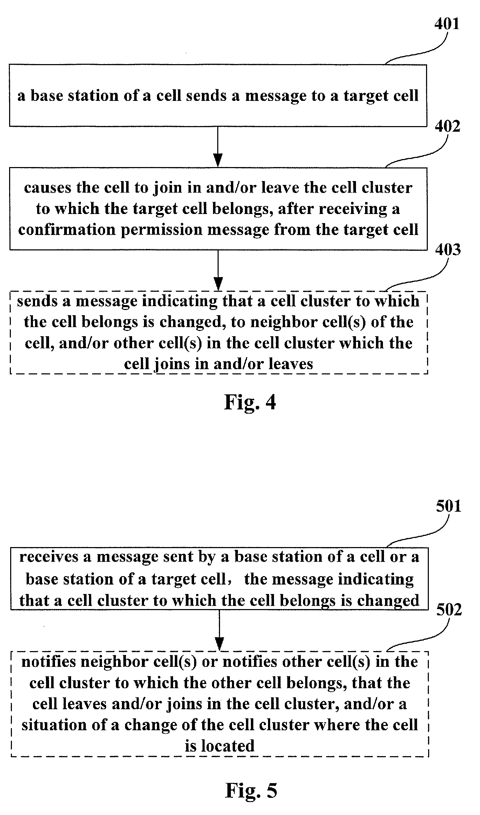

FIG. 4 is a flowchart of the method for changing a cell cluster of Embodiment 4 of the present disclosure. As shown in FIG. 4, the method includes:
step 401: a base station of a cell sends a message to a target cell, the message indicating that the cell requests to join in and/or leave a cell cluster to which the target cell belongs;
   in this embodiment, in a case where the cell joins in a cell cluster, the target cell refers to one cell, a part of or all cells in the cell cluster in which the cell is to join; in a case where the cell leaves a cell cluster, the target cell refers to another one, a part of or all cells in the cell cluster in which the cell is to leave; and in a case where the cell changes from one cell cluster into another cell cluster, the target cell refers to a combination of the above two cases, which shall not be described herein any further;
   in this embodiment, when the target cell is one cell in the cell cluster in which the cell is to join, or other one cell in the cell cluster the cell is to leave, the one cell may be a cell geographically closer to or most close to the cell; however, it is not limited thereto, and it may a farther cell;
   for example, when a cell A is to join in a cell cluster, a base station of the cell A sends a request message to any one (such as a cell B) or more of target cells (such as cells B, C, and D, etc.), requesting to join in the cell cluster to the target cell(s) belong(s);
   for example, when the cell A requests to leave a cell cluster, the base station of the cell A may send the message to any one or more of the target cells in the same cell cluster as the cell A, informing that the cell A is to leave the cell cluster to which it belongs;
   for example, the case where the cell A changes from the cell cluster to which it belongs into another cell cluster is a combination of the two cases where the cell A joins in a cell cluster and leaves a cell cluster, which shall not be described herein any further;
step 402: the base station of the cell causes the cell to join in and/or leave the cell cluster to which the target cell belongs, after receiving a confirmation permission message from the target cell;
in step 401, when the base station of the cell A requests to join in, and/or leave the cell cluster to which the target cell belongs, the base station of the target cell may determine whether the cell A may join in, and/or leave the cell cluster to which the target cell belongs; when it is determined that the cell A may join in, and/or leave, the confirmation permission message is sent to the base station of the cell A; and only when the base station of the cell A receives the confirmation permission message from the target cell, such as the cell B, the cell A joins in, and/or leaves the cell cluster to which the cell B belongs;
furthermore, after the base station of the cell A sends the message requesting to join in, and/or leave the cell cluster to which the target cell belongs, the base station of the target cell may also not confirm; that is, the cell A may directly join in, and/or leave the cell cluster to which the target cell B belongs without receiving the confirmation permission message from the target cell;
a case where the base station of the cell A sends a message for changing a cell cluster is a combination of the above two cases, which shall not be described herein any further.

In this embodiment, the method may further include:
step 403: the base station of the cell sends a message indicating that a cell cluster to which the cell belongs is changed, to neighbor cell(s) of the cell, and/or other cell(s) in the cell cluster which the cell joins in and/or leaves.

In this embodiment, the cluster to which the cell belongs is similar to that in Embodiment 2, and includes a cell cluster that has been left or is to be left, and/or a cluster in which the cell joins; and in this embodiment, the neighbor cell may be a cell geographically connected to the cell, and a cell cluster to which the neighbor cell belongs may not be the cell cluster in which the cell joins, leaves or concerned in the change.

### Embodiment 5

Embodiment 5 of the present disclosure further provides a method for changing a cell cluster, including:
a target cell receives a message sent by a base station of a cell, the message indicating that the cell requests to join in and/or leave a cell cluster to which the target cell belongs; the target cell includes one or more cell(s) in the cell cluster to be joined in by the cell, and/or other one or more cell(s) in the cell cluster to be left by the cell.

In this embodiment, after receiving the message, the target cell may further determine whether to permit the cell to join in, and/or leave the cell cluster to which the target cell belongs, then feed back a corresponding confirmation permission message to the base station of the cell. However, this step is optional.

In this embodiment, after the cell joins in, and/or leaves the cell cluster to which the target cell belongs, the target cell may also send a message indicating that a cell cluster to which the cell belongs is changed, to neighbor cell(s) of the cell, and/or other cell(s) in the cell cluster which the cell joins in and/or leaves. However, this step is optional.

### Embodiment 6

FIG. 5 is a flowchart of the method for changing a cell cluster of Embodiment 6 of the present disclosure. As shown in FIG. 5, the method includes:
step 501: a neighbor cell of a cell or other cell in a cell cluster in which the cell joins or leaves, receives a message sent by a base station of the cell or a base station of a target cell, the message indicating that the cell cluster to which the cell belongs is changed;
   the cell cluster to which the cell belongs includes a cell cluster having been or to be left, and/or a cell cluster joined in by the cell, which is similar to that described in the above embodiment, and shall not be described herein any further;
step 502: the neighbor cell or the other cell notifies neighbor cell(s) or notifies other cell(s) in the cell cluster to which the other cell belongs, that the cell leaves and/or joins in the cell cluster, and/or a situation of a change of the cell cluster where the cell is located.

In this embodiment, step 502 is optional.

In a case where there is no controller in above embodiments 4, 5 and 6, information interaction between any two cells may be performed via an X2 or Xn interface; however, it is not limited thereto, and an existing interface or a newly-established interface may also be used.

### Embodiment 7

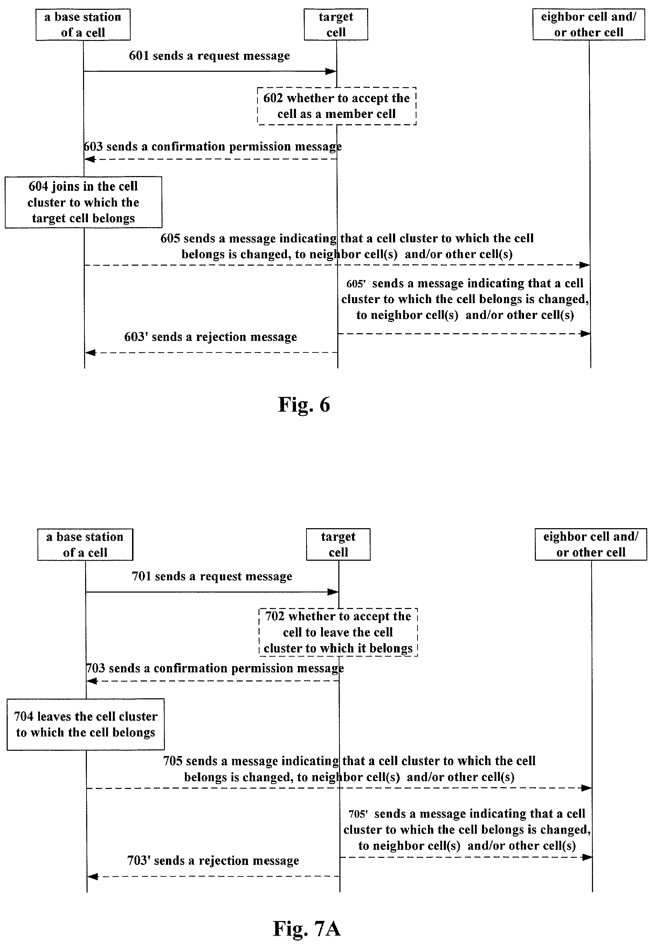

FIG. 6 is a flowchart of the method for changing a cell cluster of Embodiment 7 of the present disclosure. As shown in FIG. 6, the method includes:
step 601: a base station of a cell sends a message to a target cell, the message requesting for joining in a cell cluster to which the target cell belongs;
   the target cell is a member cell in the cell cluster to be joined in by the cell; for example, the target cell may be a cell geographically closer to or most close to the cell; for example, the cell is a cell A, and the target cell is a cell B;
   furthermore, the target cell may also be more than one or all of member cells in the cell cluster to be joined in by the cell;
step 602: the target cell (such as base station) receives the request message, and judges whether to accept the cell as a member cell;
step 603: feeds back a confirmation permission message to the base station of the cell;
   in this embodiment, when it is determined that the cell cluster to which the target cell belongs may accept the cell (the cell A) as a member cell, the base station of the target cell (the cell B) sends the confirmation permission message to the base station of the cell;
step 604: joins in the cell cluster to which the target cell belongs when the base station of the cell receives the confirmation message.

Furthermore, the method may include:
step 605: the base station of the cell sends a message indicating that a cell cluster to which the cell belongs is changed, to neighbor cell(s) of the cell, and/or other cell(s) in the cell cluster in which the cell joins.

In this embodiment, the number of the neighbor cell may be 1 or more than 1; and the number of the other cells in the cell cluster in which the cell joins may be 1 or more than 1; and step 605 is optional.

Furthermore, the method may include step 605': the target cell sends a message indicating that a cell cluster to which the cell belongs is changed, to neighbor cell(s) of the cell, and/or other cell(s) in the cell cluster in which the cell joins; and step 605' is optional.

In this embodiment, in step 602, if it is judged that the cell A is not accepted as a member cell, the base station of the target cell may send a rejection message to the base station of the cell A, rejecting the cell A to join in the cell cluster to which the cell B belongs (such as step 603' in FIG. 6), step 603' being optional. In such a case, steps 603-605 and 605' are not needed to be executed.

In this embodiment, steps 602 and 603 may also be optional, that is, confirmation of the target cell is not needed, and after the base station of the cell sends the request message, the cell is caused to join in the cell cluster to which the target cell belongs.

### Embodiment 8

FIG. 7A is a flowchart of the method for changing a cell cluster of Embodiment 8 of the present disclosure. As shown in FIG. 7A, the method includes:
step 701: a base station of a cell sends a message to a target cell, the message indicating that the cell requests for leaving a cell cluster to which the cell belongs;
   the target cell is one or more member cell(s) in a cell cluster to be left by the cell, which is similar to Embodiment 4, and shall not be described herein any further;
   for example, the target cell is a cell B;
step 702: the target cell (such as base station) receives the request message, and judges whether to accept the cell to leave the cell cluster to which it belongs;
step 703: feeds back a confirmation permission message to the base station of the cell;
   in this embodiment, when it is determined that the target cell may leave the cell cluster to which it belongs, the base station of the target cell (the cell B) sends the confirmation permission message to the base station of the cell;
step 704: leaves the cell cluster to which the cell belongs when the base station of the cell receives the confirmation permission message.

Furthermore, the method may include:
step 705: the base station of the cell sends a message indicating that a cell cluster to which the cell belongs is changed, to neighbor cell(s) of the cell, and/or other cell(s) in the cell cluster left by the cell.

In this embodiment, the cell cluster to which the cell belongs is as described in the above embodiments, and shall not be described herein any further.

The number of the neighbor cell may be 1 or more than 1; and the number of the other cells in the cell cluster in which the cell joins may be 1 or more than 1; and step 705 is optional.

Furthermore, the method may include step 705': the base station of the target cell sends a message indicating that a cell cluster to which the cell belongs is changed, to neighbor cell(s) of the cell, and/or other cell(s) in the cell cluster left by the cell; and this step is optional.

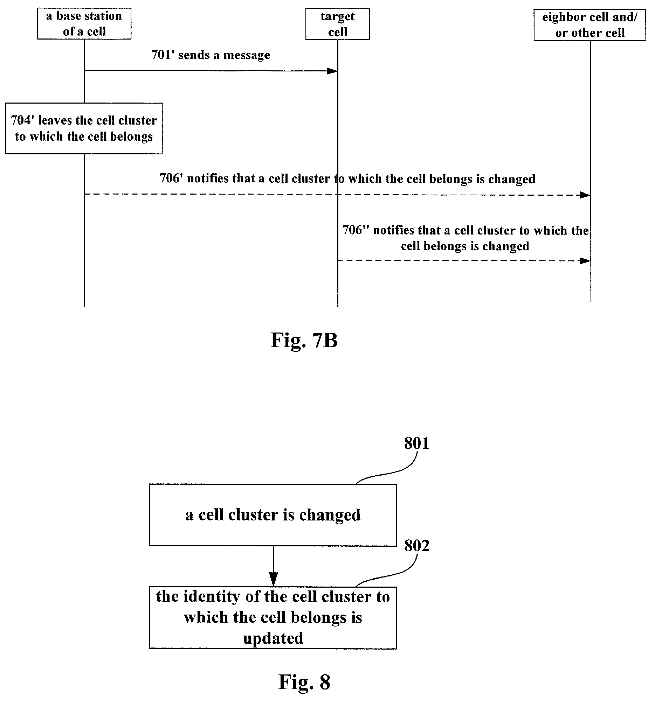

In this embodiment, in step 702, if a result of judgment is no, the base station of the target cell may send a rejection message to the base station of the cell A, rejecting the cell A to leave the cell cluster to which the target cell belongs (such as step 703' in FIG. 7), step 703' being optional.

Furthermore, in the embodiment shown in FIG. 7A, steps 702 and 703 may also be optional, and such a case shall be described below with reference to FIG. 7B.

FIG. 7B is a flowchart of the method for changing a cell cluster of Embodiment 8 of the present disclosure. As shown in FIG. 7B, the method includes:
step 701': a base station of a cell sends a message to a target cell, the message informing that the cell is to leave a cell cluster to which the cell belongs;
   in this embodiment, the target cell is as described above, and shall not be described herein any further;
step 704': the base station of the cell causes the cell to leave the cell cluster to which the cell belongs.

After step 704', step 706' may further be included:
the base station of the cell sends a message indicating that a cell cluster to which the cell belongs is changed, to neighbor cell(s) of the cell, and/or other cell(s) in the same cell cluster as the cell; step 706' being optional.

Furthermore, step 706" may be included: the base station of the target cell sends a message indicating that the cell cluster to which the cell belongs is changed, to neighbor cell(s) of the cell, and/or other cell(s) in the cell cluster left by the cell; and this step is optional.

In the embodiments 7 and 8, after steps 605 and 605', or after steps 705 or 705', 706' or 706", the neighbor cell and/or other cell may further notify the neighbor cell(s) or notify other cell(s) in the cell cluster to which the other cell belongs that the cell leaves and/or joins in the cell cluster (not shown), and/or the situation of a change of the cell cluster to which the cell belongs.

### Embodiment 9

Embodiment 9 of the present disclosure further provides a method for changing a cell cluster, that is, a cell changes from a cell cluster to which it belongs into another cell cluster, such a case corresponding to a combination of a cell joining in a cell cluster and leaving a cell cluster to which it belongs, which shall not be described herein any further.

In the above embodiments 1-9, the cell is caused to dynamically change by using the above method, and by making the cell cluster change dynamically, advantages may be obtained by an enhancement mechanism in the small cell cluster in more cases, such as performing inter-cell interference coordination and suppression, so as to achieve increase of throughput of the UE and/or the network.

### Embodiment 10

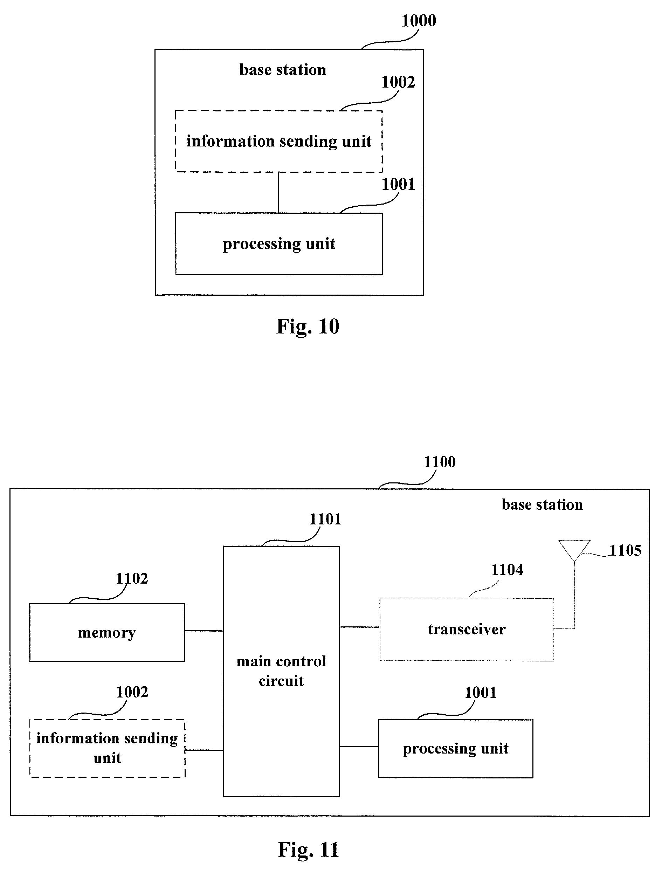

FIG. 8 is a flowchart of the method for changing a cell cluster of Embodiment 10 of the present disclosure. At a cell side, as shown in FIG. 10, the method includes:
step 801: a cell cluster is changed;
the cell cluster may be changed by using the method described above.

A difference between this embodiment and the above embodiment exists in: a base station of the cell may transmit system information, the system information including a cell cluster identity of a cell cluster to which the cell belongs.

And after the cell cluster to which the cell belongs is changed, the method further includes:
step 802: the identity of the cell cluster to which the cell belongs is updated.

In this embodiment, when a cell identity of the cell is unrelated to the cell cluster to which the cell belongs, that is, the cell identity does not change after the cell joins in, leaves or changes a cell cluster, the base station of the cell may change the identity of the cell cluster contained in the system information.

In this embodiment, when the cell identity of the cell is related to the cell cluster to which the cell belongs, that is, after the cell joins in, leaves or changes a cell cluster, the cell identity will change. For example, the cell identity is jointly determined by the cell cluster and the cell. A first-grade identity of the cell is an identity of the cell cluster, and a second-grade identity of the cell is a virtual identity in the cell cluster.

When the cell identity of the cell is related to the cell cluster to which the cell belongs, if the cell identity of the cell is unrelated to physical signals sent by the base station and the UE of the cell, after changing the cell cluster, the base station of the cell changes the identity of the cell cluster contained in the system information.

In this embodiment, when the cell identity of the cell is related to the cell cluster to which the cell belongs, if the cell identity of the cell is related to physical signals sent by the base station and the UE of the cell, for example, a sequence and a position of a downlink common signal, and/or a sequence of an uplink/downlink UE-specific pilot signal, is/are scrambled by a random sequence related to the cell identity, etc., the base station of the cell will perform corresponding operations, which shall be described in the following embodiments.

### Embodiment 11

Embodiment 11 of the present disclosure further provides a method for changing a cell cluster. A difference between this embodiment and Embodiment 10 exists in that in a case where the cell identity of the cell is related to the cell cluster to which the cell belongs, if the cell identity of the cell is related to the physical signals sent by the base station and the UE of the cell, the base station of the cell further performs the following operations:
the base station of the cell sends an indication message to the UE, the indication message indicating that the cell identity, and/or related uplink and/or downlink transmission signal is/are changed; the indication message including the changed cell identity, and/or time of changing the cell identity and/or the related uplink and/or downlink transmission signal.

In this embodiment, the base station of the cell may notify the UE of the change of the cell identity, or the change of related uplink and downlink transmission signal, via physical layer signaling (such as downlink control information (DCI) of a physical control channel), or medium access control (MAC) layer signaling, or radio resource control (RRC) layer signaling.

The message will carry a new identity of the cell.

In this embodiment, when the cell will change the cell identity and perform corresponding change (such as change of uplink and downlink transmission signal) after the UE receives the message may be agreed in advance by the base station side and the UE side, such as at a first subframe of a frame after receiving the message. In such a case, the message needs not to contain a time of change.

Furthermore, the message may particularly contain a time point when the cell identity is changed, and/or a corresponding change is performed, such as delaying by several subframes.

At the UE side:
when the cell cluster to which the cell belongs is changed, the UE receives the indication information sent by the base station of the cell, the indication information indicating that the cell identity, and/or a related uplink and/or downlink transmission signal is/are changed; the indication message including the changed cell identity, and/or time of changing the cell identity and/or the related uplink and/or downlink transmission signal.

In this way, after receiving the indication information indicating that the cell identity is changed, the UE will identify cell system information, or receive a cell common signal and a downlink control channel, and/or change a scrambling sequence and a reference signal sequence related to the cell identity in its uplink signal, by using the received new cell identity at a designated time point.

### Embodiment 12

Embodiment 12 of the present disclosure further provides a method for changing a cell cluster. A difference between this embodiment and Embodiment 10 exists in that in a case where the cell identity of the cell is related to the cell cluster to which the cell belongs, if the cell identity of the cell is related to the physical signals sent by the base station and the UE of the cell, the base station of the cell further performs the following operations:
the base station of the cell hands over the UE of the cell to another cell, and then changes the cell identity, or changes the cell identity and corresponding system information and/or a common signal.

For example, the base station of the cell (briefly referred to as a cell A) hands over all UEs served by it to the other cell (briefly referred to as a cell B), and then changes the cell identity, the corresponding system information and a downlink common signal (the cell A with the cell identity being changed is briefly referred to as a cell A1).

Thus, after handing over to the cell B, it may further hand over UEs suitable for proceeding with providing services to it back, that is, handing over back to the cell A1 with the cell identity being changed. For the "a UE suitable for proceeding with providing services to it", the cell B may configure the UE to perform cell search and measurement (including the cell A with the cell identity being changed), and judge whether to hand over the UE back to the cell A1, or the cell B proceeds with serving for it, or to hand over to a more suitable third cell, according to a report of measurement. Such a process is similar to that in the relevant art, and shall not be described herein any further.

At the cell B side after the handover:
in the process of cell search, the cell B may provide the UE with assistance information on the cell A1 with the cell identity being changed, the assistance information indicating that the UE can use timing of the cell with cell identity not being changed, and/or indicating that the UE can hand over to the cell A1 with a cell identity being changed in a random access process by using an original cell radio network temporary identity (C-RNTI); or the assistance information indicating that the UE can use the timing of the cell with the cell identity not being changed, the UE can hand over to the cell with the cell identity being changed in a random access process by using the original cell radio network temporary identity, and the UE can directly access to the cell with cell identity being changed without performing random access.
   Example 1: the cell B notifies the UE via the assistance information that the downlink timing of the cell A1 is identical to that of the cell A.
   Example 2: if it is determined to hand over the UE back to the cell A1, in some cases (for example, the cell B may determine that physical shift resulting in difference of uplink timing does not occur between a certain UE leaving the cell A and preparing for handing over to the cell A), the cell B may provide the UE with the assistance information on the cell A1, for example, informing the UE that the uplink TA of the cell A1 is identical to that of the cell A.
   Example 3: if it is determined to hand over the UE back to the cell A1, the cell B may further provide the UE with the assistance information on the cell A1, for example, informing the UE that in the random access process, the UE may reuse the original C-RNTI for the access.
   Example 4: based on examples 1-3, the assistance information may further inform the UE that it may directly access to the cell A1 without performing random access.

At the UE side:
when the cell cluster to which the cell belongs changes, the UE handing over from the cell to the other cell receives the assistance information sent by the base station of the other cell to the UE, the assistance information indicating that the UE can use timing of the cell with the cell identity not being changed, and/or indicating that the UE can hand over to the cell with the cell identity being changed in a random access process by using an original C-RNTI; or the assistance information indicating that the UE can use the timing of the cell with the cell identity not being changed, the UE can hand over to the cell with the cell identity being changed in a random access process by using the original C-RNTI, and the UE can directly access to the cell with the cell identity being changed without performing random access.

### Embodiment 13

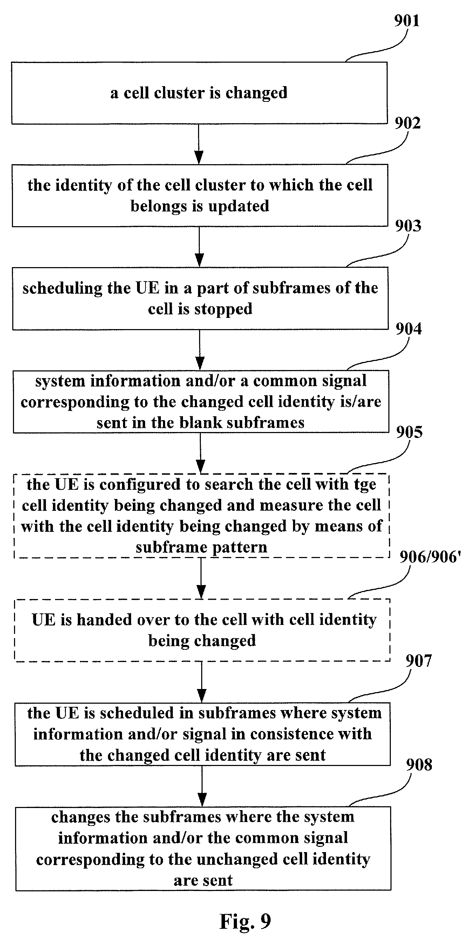

FIG. 9 is a flowchart of the method for changing a cell cluster of Embodiment 13 of the present disclosure. A difference between this embodiment and Embodiment 10 exists in that in a case where the cell identity of the cell is related to the cell cluster to which the cell belongs, if the cell identity of the cell is related to the physical signals sent by the base station and the UE of the cell, the base station of the cell further performs the following operations:
step 903: the base station of the cell stops scheduling the UE in a part of subframes of the cell;
   subframes where no UE is scheduled are generated in step 903, that is, the part of the subframes is referred to as blank subframes;
step 904: system information and/or a common signal corresponding to the changed cell identity is/are sent in the blank subframes;
   the base station of the cell may send the system information and/or the common signal corresponding to a new cell identity in the blank subframes (the cell using the old cell identity is referred to as a cell A, and the cell using the new cell identity (i.e. the cell with the cell identity being changed) is referred to as a cell A1);
step 905: the UE is configured to search the cell with the cell identity being changed and measure the cell with the cell identity being changed by means of subframe pattern;
the base station of the cell with the cell identity being changed (the base station of the cell A) performs the above configuration;
measurement by means of subframe pattern refers to performing measurement on carriers to be measured only in part of subframes;

in this embodiment, where there is a step of measurement, step 906 may be included: whether to hand over a certain UE to the cell with the cell identity being changed or to hand over the UE to a more suitable cell, is judged according to a result of measurement;
and where there is no step of measurement, step 906' may be included: the base station of the cell hands over all UE served by the base station of the cell to the cell with the cell identity being changed (i.e. the cell A1);
the above steps 905 and 906/906' are optional;
step 907: the base station of the cell with the cell identity being changed (the base station of the cell A) schedules the UE in the subframes where the system information and/or the common signal in consistence with the changed cell identity are sent; and
step 908: the base station of the cell changes the subframes where the system information and/or the common signal corresponding to the unchanged cell identity are sent;
in this way, all the subframes are caused to send the system information and/or the common signal in consistence with the changed cell identity.

After the changes of the subframes, the base station of the cell A1 (the base station of the cell A) schedules the UE in all the subframes.

### Embodiment 14

FIG. 10 is a schematic diagram of a structure of the base station of Embodiment 14 of the present disclosure. When a controller is provided at a network side, the base station corresponds to a base station of a cell, and causes the cell to join in, leave or change a cell cluster according to indication of the network side controller.

As shown in FIG. 10, the base station 1000 includes: a processing unit 1001 configured to cause a cell to join in a cell cluster, or leave a cell cluster to which the cell belongs, or change the cell cluster to which the cell belongs into another cell cluster, according to indication information received from a network side controller.

In this embodiment, the cell may be a small cell, but it is not limited thereto. Following description shall be given taking that the cell is a small cell as an example.

In this embodiment, the base station 1000 may further include an information sending unit 1002 configured to send a request message to the network side controller, the request message indicating that the cell requests to join in the cell cluster, or leave the cell cluster to which the cell belongs, or change the cell cluster to which the cell belongs into the other cell cluster.

Hence, after the base station 1000 sends the request message, the processing unit 1001 may be configured to cause the cell to join in a cell cluster, or leave a cell cluster to which the cell belongs, or change the cell cluster to which the cell belongs into another cell cluster, according to the indication information sent by the network side controller according to the request message.

In this embodiment, the information sending unit 1002 is optional, and implementations of the processing unit 1001 and the information sending unit 1002 are similar to those in Embodiment 1, and shall not be described herein any further. In this embodiment, the network side controller is as described in Embodiment 1, and shall not be described herein any further. And an interface between the controller and the cell is as described in Embodiment 1, and shall not be described herein any further.

It can be seen from the above embodiment that the base station may cause a cell to join in, leave or change from one cell cluster to another cell cluster according to the indication information sent by the network side controller, thereby making the cell cluster be dynamically changed, and advantages being obtained by an enhancement mechanism in the cell cluster.

In this embodiment, besides the above components, the base station 1000 may further include other components similar to those in the relevant art, which shall be described below with reference to FIG. 11.

FIG. 11 is a schematic diagram of a structure of the base station of Embodiment 14 of the present disclosure. Based on the base station shown in FIG. 10, besides the above functional modules shown in FIG. 10, the base station 1100 may further include other known components: a main control circuit 1101, a memory 1102, a transceiver 1104 and an antenna 1150; the memory 1102 may store a program changing the cell cluster of Embodiment 13, and executes the program under control of the main control circuit 1101, a process of execution of the program being as described in Embodiment 1, and shall not be described herein any further. Functions of the other components are similar to those in the relevant art, which shall not be described herein any further. Furthermore, the components shown in FIG. 10 may be integrated into the main control circuit 1101.

### Embodiment 15

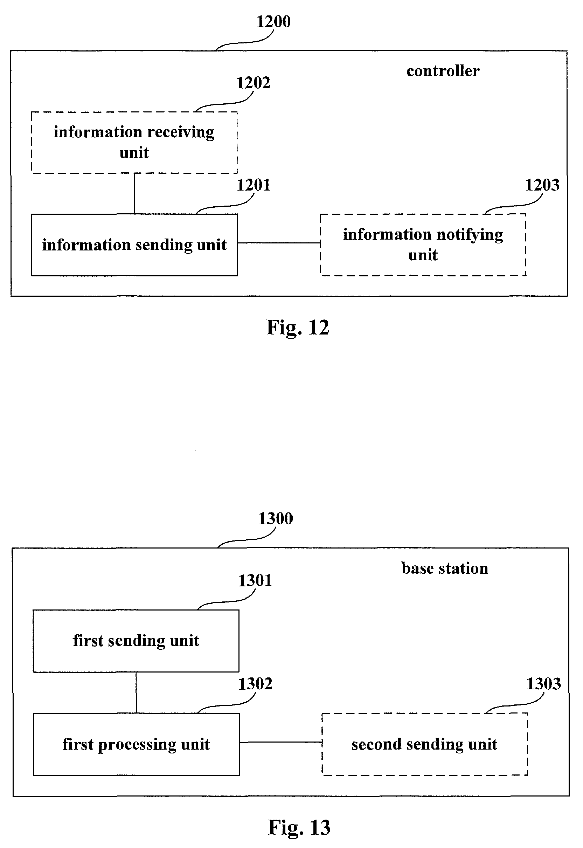

FIG. 12 is a schematic diagram of a structure of the controller of Embodiment 15 of the present disclosure. As shown in FIG. 12, the controller 1200 includes:

an information sending unit 1201 configured to send indication information to a base station of a cell, the indication information indicating the cell to join in a cell cluster, or leave a cell cluster to which the cell belongs, or change the cell cluster to which the cell belongs into another cell cluster.

In this embodiment, the controller 1200 may be configured to determine whether the cell to join in a cell cluster, or leave a cell cluster to which the cell belongs, or change the cell cluster to which the cell belongs into another cell cluster, and then send the indication information to the base station of the cell according to a result of determination. Thus, the controller 1200 may further include a determining unit (not shown) configured to determine whether the cell to join in a cell cluster, and/or leave a cell cluster to which the cell belongs. This component is optional.

It can be seen from the above embodiment that the controller 1200 may be configured to send the indication information to the base station of the cell. Hence, after obtaining the indication information, the base station of the cell may cause a cell to join in a cell cluster, or leave a cell cluster, or change from one cell cluster into another cell cluster, thereby making the cell cluster be dynamically changed, and advantages being obtained by an enhancement mechanism in the cell cluster.

In this embodiment, the information sending unit 1201 may be configured to send the indication information according to a request from a cell side. Hence, as shown in FIG. 12, the controller 1200 further includes:
an information receiving unit 1202 configured to receive a request message from the cell, the request message indicating that the cell requests to join in the cell cluster, or leave the cell cluster to which the cell belongs, or change the cell cluster to which the cell belongs into the other cell cluster.

Hence, the information sending unit 1201 may be configured to perform corresponding configuration according to the request message received by the information receiving unit 1202.

In this embodiment, the controller 1200 may further include:
an information notifying unit 1203 configured to notify other cell(s) in the cell cluster to which the cell belongs, that the cell leaves the cell cluster, and/or the cell joins in the cell cluster; the cell cluster where the cell is located includes a cell cluster having been or to be left, and/or a cell cluster joined in by the cell. Details are as described in Embodiment 2, and shall not be described herein any further.

In this embodiment, the controller 1200 may be a macro base station, a core network, or another physical entity, which are as described in embodiments 1 and 2, and shall not be described herein any further.

In this embodiment, when the network side controller is a macro base station, interaction between the controller and the cell may be performed via an X2 interface or an Xn interface; when the network side controller is a core network, interaction between the controller and the cell may be performed via an S1 interface; and when the network side controller is a physical equipment specifically used for controlling cell clusters, a new interface may be defined, and interaction between the controller and the cell may be performed via the interface.

In this embodiment, the information receiving unit 1202 and the information notifying unit 1203 are optional.

In this embodiment, particular implementations of the information sending unit 1201, the information receiving unit 1202 and the information notifying unit 1203 are similar to those in Embodiment 2, and shall not be described herein any further.

### Embodiment 16

Embodiment 16 of the present disclosure provides a communication system, including the base station of the cell as described in Embodiment 14 and the controller as described in Embodiment 15. A particular implementation is as described in Embodiment 3, and shall not be described herein any further.

### Embodiment 17

FIG. 13 is a schematic diagram of a structure of the base station of Embodiment 17 of the present disclosure. When a controller is not provided at a network side, the base station corresponds to a base station of a cell, and causes the cell to join in, leave or change a cell cluster according to an application to a target cell.

As shown in FIG. 13, the base station 1300 includes: a first sending unit 1301 and a first processing unit 1302;
the first sending unit 1301 is configured to send a message to the target cell, the message indicating that a cell requests to join in and/or leave a cell cluster to which the target cell belongs;
the target cell includes one or more cell(s) in a cell cluster to be joined in by the cell, and/or other one or more cell(s) in a cell cluster to be left by the cell; details are as described in Embodiment 4, which shall not be described herein any further;
and the first processing unit 1302 is configured to cause the cell to join in and/or leave the cell cluster to which the target cell belongs, after sending message or receiving a confirmation permission message from the target cell.

In this embodiment, the base station 1300 further includes:
a second sending unit 1303 configured to send a message indicating that a cell cluster to which the cell belongs is changed, to neighbor cell(s) of the cell, or other cell(s) in the cell cluster to which the cell belongs; the cell cluster to which the cell belongs includes a cell cluster having been or to be left, and/or a cell cluster joined in by the cell.

Implementations of the first sending unit 1301, the first processing unit 1302 and the second sending unit 1303 are similar to those as described in Embodiment 4, which shall not be described herein any further. And the second sending unit 1303 is optional.

It can be seen from the above embodiment that the base station 1300 may cause a cell to join in, leave or change from one cell cluster to another cell cluster via the sent message, thereby making the cell cluster be dynamically changed, and advantages being obtained by an enhancement mechanism in the cell cluster.

Furthermore, the base station 1300 may include other known components, which are similar to those as described in Embodiment 14 shown in FIG. 11, and shall not be described herein any further.

### Embodiment 18

Embodiment 18 of the present disclosure further provides a base station, corresponding to the base station of the target cell in Embodiment 17.

In this embodiment, the base station includes a receiving unit configured to receive a message sent by a base station of a cell, the message indicating that the cell requests to join in and/or leave a cell cluster to which the target cell belongs; wherein the target cell includes one or more cell(s) in the cell cluster to be joined in by the cell, and/or other one or more cell(s) in the cell cluster to be left by the cell.

In this embodiment, the base station may further include a first information sending unit configured to determine to accept the cell to join in, and/or leave the target cell, and send a confirmation permission message to the base station of the cell when it is determined to accept. The first information sending unit is optional.

In this embodiment, the base station may further include a second information sending unit configured to send a message indicating that the cell cluster to which the cell belongs is changed to neighbor cell(s) of the cell or other cell(s) in the same cell cluster as the cell after the cell cluster is changed. The cell cluster to which the cell belongs includes a cell cluster that has been left or is to be left, and/or a cell cluster in which the cell joins. The second information sending unit is optional.

Furthermore, the base station may include other known components, which are similar to those as described in Embodiment 14 shown in FIG. 11, and shall not be described herein any further.

### Embodiment 19

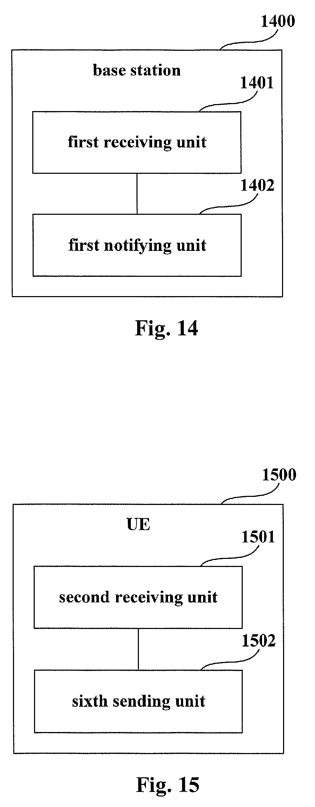

FIG. 14 is a schematic diagram of a structure of the base station of Embodiment 19 of the present disclosure. The base station corresponds to the base station of the cell neighboring the base station of the cell in Embodiment 17, or the base station of the other cell in the same cell cluster as the cell.

As shown in FIG. 14, the base station 1400 includes: a first receiving unit 1401 and a first notifying unit 1402;
the first receiving unit 1401 is configured to receive a message sent by a base station of the cell or a base station of a target cell, the message indicating that a cell cluster to which the cell belongs is changed; wherein the cell cluster to which the cell belongs includes a cell cluster having been or to be left, and/or a cell cluster joined in by the cell;
and the first notifying unit 1402 is configured to notify cell(s) to which the base station belongs, that the cell leaves and/or joins in the cell cluster, and/or the situation of a change of the cell cluster to which the cell belongs.

Implementations of the first receiving unit 1401 and the first notifying unit 1402 are similar to those as described in Embodiment 6, which shall not be described herein any further.

Furthermore, the base station 1400 may include other known components, which are similar to those as described in Embodiment 14 shown in FIG. 11, and shall not be described herein any further.

### Embodiment 20

Embodiment 20 of the present disclosure further provides a communication system, including the base station as described in Embodiment 17 and the base station as described in Embodiment 18. Embodiments 17 and 18 may be referred to for a particular structure of the communication system, which shall not be described herein any further. Furthermore, the communication system may include the base station as described in Embodiment 19. Embodiment 19 may be referred to for a particular structure of the communication system, which shall not be described herein any further.

A particular implementation of the system may be addressed to a cell joining in, leaving or changing a cell cluster, and embodiments 4-9 may be referred to for details, which shall not be described herein any further.

### Embodiment 21

Embodiment 21 of the present disclosure further provides a base station, which is based on the base station described in embodiments 14 and 17. In this embodiment, besides the above components included in the above base station, the base station further includes an information updating unit configured to update an identity of the cell cluster to which the cell belongs.

A detailed manner of updating is as described in Embodiment 10. For example, when the cell identity of the cell is unrelated to the cell cluster to which the cell belongs, that is, the cell identity does not change after the cell joins in, leaves or changes a cell cluster, the information updating unit is configured to change the identity of the cell cluster contained in the system information.

When the cell identity of the cell is related to the cell cluster to which the cell belongs, that is, after the cell joins in, leaves or changes a cell cluster, the cell identity will change. For example, the cell identity is jointly determined by the cell cluster and the cell. A first-grade identity of the cell is an identity of the cell cluster, and a second-grade identity of the cell is a virtual identity in the cell cluster.

When the cell identity of the cell is related to the cell cluster to which the cell belongs, if the cell identity is unrelated to physical signals sent by the base station and UE of the cell, after changing the cell cluster, the base station of the cell changes the identity of the cell cluster contained in the system information.

In this embodiment, when the cell identity of the cell is related to the cell cluster to which the cell belongs, if the cell identity of the cell is related to the physical signals sent by the base station and the UE of the cell, for example, a sequence and a position of a downlink common signal, and/or a sequence of an uplink/downlink UE-specific pilot signal, is/are scrambled by a random sequence related to the cell identity, etc., the base station of the cell will perform corresponding operations, which shall be described in the following embodiments.

### Embodiment 22

An embodiment of the present disclosure further provides a base station. Based on Embodiment 21, in a case where the cell identity of the cell is related to the cell cluster to which the cell belongs, if the cell identity of the cell is related to the physical signals sent by the base station and the UE of the cell, the apparatus further includes the following components:
a third sending unit and a fourth sending unit; wherein, the third sending unit is configured to send an indication message to the UE, the indication message indicating that the cell identity, and/or a related uplink and/or downlink transmission signal is/are changed; the indication message includes the changed cell identity, and/or time of changing the cell identity and/or the related uplink and/or downlink transmission signal; and the fourth sending unit configured to change the cell identity and/or the related uplink and/or downlink transmission signal at the time. A particular implementation is as described in Embodiment 11, which shall not be described herein any further.

In such a case, after receiving the message indicating that the cell identity is changed, the UE will identify system information, and/or a cell common signal and a downlink control channel, or change a scrambling sequence and a reference signal sequence related to the cell identity in its uplink signal, by using the received new cell identity at a designated time point. Details are as described in Embodiment 11, which shall not be described herein any further.

### Embodiment 23

FIG. 15 is a schematic diagram of a structure of the UE of Embodiment 23 of the present disclosure. The UE 1500 includes:
a second receiving unit 1501 configured to receive indication information sent by a base station of a cell when a cell cluster to which the cell belongs is changed, the indication information indicating that cell identity and/or a related uplink and/or downlink transmission signal is/are changed; the indication information including the changed cell identity, and/or time of changing the cell identity and/or the related uplink and/or downlink transmission signal; and
a sixth sending unit 1502 configured to send system information, and/or a common signal, and/or a downlink control signal sent by the base station of the cell, and/or change a scrambling sequence or a reference signal sequence related to the cell identity in an uplink signal of the UE, by using the changed cell identity at the time indicated by the indication information.

In this embodiment, besides the above functional components, the UE 1500 may further include other components similar to those in the relevant art.

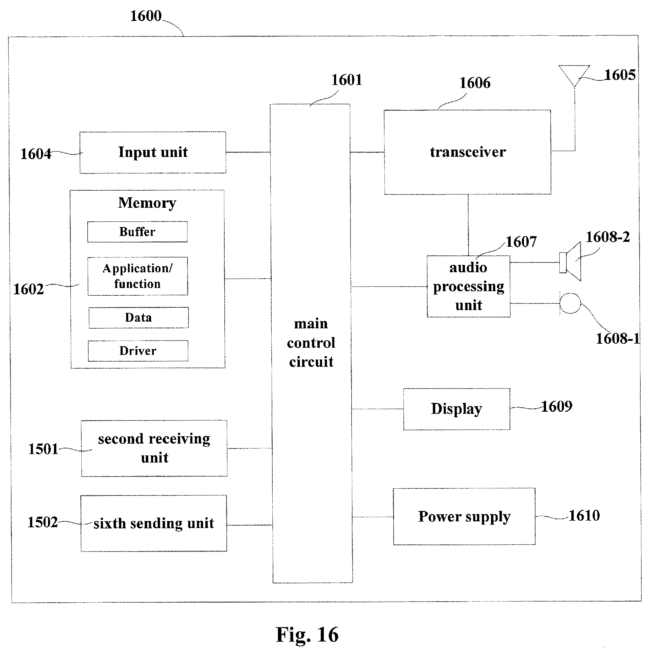

FIG. 16 is a schematic diagram of a structure of the UE of Embodiment 23 of the present disclosure. For example, the UE is a mobile phone; however, this figure is exemplary only.

As shown in FIG. 16, besides the second receiving unit 1501 and sixth sending unit 1502, the UE 1500 may further include a main control circuit 1601, a transceiver 1606, an input unit 1604, an audio processing unit 1607, a memory 1602, a display 1609, and a power supply 1610, etc. Functions of the above components are similar to those in the relevant art, which shall not be described herein any further. Components of the mobile phone 1600 may be carried out by specific hardware, firmware, software, or a combination thereof, without departing from the scope of the present disclosure.

### Embodiment 24

Embodiment 24 of the present disclosure further provides a base station. Based on Embodiment 21, in a case where the cell identity of the cell is related to the cell cluster to which the cell belongs, if the cell identity of the cell is related to the physical signals sent by the base station and the UE of the cell, the apparatus further includes the following components:
a first handover unit and a first changing unit; wherein, the first handover unit is configured to hand over the UE of the cell to other cell, and the first changing unit is configured to change the cell identity, or change the cell identity and corresponding system information and/or a common signal.

In this embodiment, the above UE is handed over from one cell (such as a cell A) to another cell (a cell B), the handed over cell A is denoted by a cell A1; hence, the other cell B may further hand over the handed over UE back to the cell A1, or keep it in the cell B, or hand over it to a more suitable third cell. A particular implementation is as described in Embodiment 12, which shall not be described herein any further.

### Embodiment 25

Embodiment 25 of the present disclosure further provides a base station. Based on Embodiment 24, after the first handover unit of the base station of Embodiment 24 hands over the UE of the cell to which it belongs into the other cell, the base station of this embodiment may configure the UE to perform cell search and measurement, and judge whether to hand over the UE back to the cell A1 with the cell identity being changed, or cause the other cell to proceed with serving for the UE, or hand over the UE to a more suitable third cell, according to a report of measurement reported by the UE. Such a process is similar to that in the relevant art, and shall not be described herein any further.

In this embodiment, in the process of performing cell search, the base station may further include an information sending unit configured to provide assistance information (related to the cell A1 with the cell identity being changed) to the UE, the assistance information indicating that the UE can use the timing of the cell with cell identity not being changed, and/or indicating that the UE can hand over to the cell with the cell identity being changed in a random access process by using an original C-RNTI, or, the assistance information indicating that the UE can use the timing of the cell with the cell identity not being changed, the UE can handover to the cell with the cell identity being changed in the random access process by using the original C-RNTI, and the UE can directly access to the cell with cell identity being changed without performing random access. Details are as described in Embodiment 2, which shall not be described herein any further.

### Embodiment 26

Embodiment 26 of the present disclosure provides a UE. The UE includes a third receiving unit configured to receive assistance information sent from a base station of other cell to the UE when a cell cluster to which a cell belongs is changed, the UE being handed over from the cell into the other cell and the assistance information indicating that the UE can use the timing of the cell with the cell identity not being changed and/or indicating that the UE can hand over to the cell with the cell identity being changed in a random access process by using an original cell radio network temporary identity, or the assistance information indicating that the UE can use the timing of the cell with the cell identity not being changed, the UE can hand over to the cell with the cell identity being changed in the random access process by using the original cell radio network temporary identity, and the UE can directly access the cell with cell identity being changed rather than performing random access.

### Embodiment 27

Embodiment 27 of the present disclosure further provides a base station. Based on Embodiment 21, in a case where the cell identity of the cell is related to the cell cluster to which the cell belongs, if the cell identity of the cell is related to the physical signals sent by the base station and the UE of the cell, the apparatus further includes the following components:
a first scheduling unit configured to stop scheduling the UE in a part of subframes of the cell, the part of subframes being referred to as blank subframes.

The base station may further include a fifth sending unit and a second changing unit; the fifth sending unit is configured to send system information and/or a common signal corresponding to the changed cell identity in the part of subframes, and the second changing unit is configured to change subframes where system information and/or a common signal corresponding to the unchanged cell identity are sent, so that the system information and/or the common signal corresponding to the changed cell identity can be sent in all the subframes.

Furthermore, the base station may include a second scheduling unit and a third scheduling unit; the second scheduling unit is configured to schedule the UE in the subframes where the system information and/or the common signal corresponding to the changed cell identity are sent, after the fifth sending unit sends the system information and/or the common signal, and the third scheduling unit is configured to schedule the UE in all the subframes after the second changing unit changes the subframes.

In this embodiment, the base station may further include a first configuring unit configured to configure the UE to search a cell with a cell identity being changed, and measure the cell with the cell identity being changed by means of subframe pattern.

Or, the base station may further include a second hand over unit configured to handover the UE of the cell to the cell with the cell identity being changed, or handover a UE needing to be handed over to the cell with the cell identity being changed or other cell according to a measurement result.

In this embodiment, the base station may further include an information providing unit configured to provide assistance information to the UE, the assistance information indicating that the UE can use the timing of the cell with the cell identity not being changed, and/or indicating that the UE can handover to the cell with the cell identity being changed in a random access process by using an original cell radio network temporary identity, or the assistance information indicating that the UE can use the timing of the cell with the cell identity not being changed, the UE can handover to the cell with the cell identity being changed in the random access process by using the original cell radio network temporary identity, and the UE can directly access the cell with the cell identity being changed rather than performing random access. A particular implementation of the above apparatus is as described in Embodiment 13, which shall not be described herein any further.

### Embodiment 28

Embodiment 28 of the present disclosure further provides a communication system. Based on the system of Embodiment 16 or 20, this communication system may further include the UE as described in Embodiment 23 and/or Embodiment 26 and/or the base station as described in Embodiment 25. The base station may send assistant information to the UE. Details are as described in Embodiment 25, which shall not be described herein any further.

The UE may receive assistant information sent by a base station of another cell (such as a base station of a cell B), or may receive indication information sent by a base station of a cell (such as a base station of a cell A). Details are as described in Embodiment 26 or 24, which shall not be described herein any further.

An embodiment of the present disclosure further provides a computer-readable program, wherein when being executed in a base station, the program enables a computer to carry out the method for changing a cell cluster as described in embodiments 1 and 3-13 in the base station.

An embodiment of the present disclosure further provides a storage medium which stores a computer readable program, wherein the computer readable program enables a computer to carry out the method for changing a cell cluster as described in embodiments 1 and 3-13 in a base station.

An embodiment of the present disclosure further provides a computer-readable program, wherein when being executed in a controller, the program enables a computer to carry out the method for receiving information as described in Embodiment 2 in the controller.

An embodiment of the present disclosure further provides a storage medium which stores a computer readable program, wherein the computer readable program enables a computer to carry out the method for receiving information as described in Embodiment 2 in a controller.

An embodiment of the present disclosure further provides a computer-readable program, wherein when being executed in a UE, the program enables a computer to carry out the method for receiving information as described in embodiments 11-12 in the UE.

An embodiment of the present disclosure further provides a storage medium which stores a computer readable program, wherein the computer readable program enables a computer to carry out the method for receiving information as described in embodiments 11-12 in a UE.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

## Claims

1. A method for changing a cell cluster, comprising:
causing, by a base station of a cell, the cell to join in a cell cluster, or leave a cell cluster to which the cell belongs, or change a cell cluster to which the cell belongs into another cell cluster, according to indication information received from a network side controller.

2. The method according to claim 1, further comprising:
sending, by the base station of the cell, a request message to the network side controller, the request message indicating that the cell requests to join in the cell cluster, or leave the cell cluster to which the cell belongs, or change the cell cluster to which the cell belongs into the other cell cluster.

3. A method for changing a cell cluster, comprising:
sending, by an network side controller, indication information to a base station of a cell, the indication information indicating the cell to join in a cell cluster, or leave a cell cluster to which the cell belongs, or change a cell cluster to which the cell belongs into another cell cluster.

4. The method according to claim 3, further comprising:
receiving a request message from the cell, the request message indicating that the cell requests to join in the cell cluster, or leave the cell cluster to which the cell belongs, or change the cell cluster to which the cell belongs into the other cell cluster,
wherein the network side controller sends the indication information according to the request message.

5. The method according to claim 3, further comprising:
notifying, by the network side controller, other cell(s) in the cell cluster to which the cell belongs, that the cell leaves the cell cluster, and/or the cell joins in the cell cluster;
wherein, the cell cluster to which the cell belongs comprises a cell cluster having been or to be left, and/or a cell cluster joined in by the cell.

6. A method for changing a cell cluster, comprising:
sending, by a base station of a cell, a message to an network side controller or a target cell, the message indicating that the cell requests to join in and/or leave a cell cluster to which the target cell belongs; wherein, the target cell comprises one or more cell(s) in the cell cluster to be joined in by the cell, and/or other one or more cell(s) in the cell cluster to be left by the cell; and
causing, by the base station of the cell, the cell to join in and/or leave the cell cluster to which the target cell belongs, after sending the message or when receiving a confirmation permission message from the target cell.

7. The method according to claim 6, further comprising:
sending, by the base station of the cell, a message indicating that a cell cluster to which the cell belongs is changed, to neighbor cell(s) of the cell, or other cell(s) in the cell cluster to which the cell belongs;
the cell cluster to which the cell belongs comprises a cell cluster having been or to be left, and/or a cell cluster joined in by the cell.

8. A method for changing a cell cluster, comprising:
receiving, by a target cell, a message sent by a base station of a cell, the message indicating that the cell requests to join in and/or leave a cell cluster to which the target cell belongs; wherein, the target cell comprises one or more cell(s) in the cell cluster to be joined in by the cell, and/or other one or more cell(s) in the cell cluster to be left by the cell.

9. A method for changing a cell cluster, comprising:
receiving, by a neighbor cell of a cell or another cell in a cell cluster to which the cell belongs, a message sent by a base station of the cell or a base station of a target cell, the message indicating that the cell cluster to which the cell belongs is changed; wherein the target cell comprises one or more cell(s) in a cell cluster to be joined in by the cell, and/or other one or more cell(s) in a cell cluster to be left by the cell; the cell cluster to which the cell belongs comprises a cell cluster having been or to be left, and/or a cell cluster joined in by the cell; and
notifying, by the neighbor cell or the other cell, neighbor cell(s) or other cell(s) in the cell cluster to which the other cell belongs, that the cell leaves and/or joins in the cell cluster, and/or the situation of a change of the cell cluster where the cell is located.

10. The method according to claim 1 or 6, wherein after the cell cluster to which the cell belongs is changed, the method further comprises:
updating an identity of the cell cluster to which the cell belongs.

11. The method according to claim 10, wherein the base station of the cell changes the identity of the cell cluster contained in received system information, when a cell identity of the cell is unrelated to the cell cluster to which the cell belongs, or a cell identity of the cell is related to the cell cluster to which the cell belongs while unrelated to physical signals sent by the base station and UE of the cell.

12. The method according to claim 1 or 6, wherein after the cell cluster to which the cell belongs is changed, and when a cell identity of the cell is related to the cell cluster to which the cell belongs while related to physical signals sent by the base station and UE of the cell, the method further comprising:
sending an indication message to the UE, the indication message indicating that the cell identity, and/or a related uplink and/or downlink transmission signal is/are changed; the indication message comprising the changed cell identity, and/or time of changing the cell identity and/or the related uplink and/or downlink transmission signal; and
changing, by the base station of the cell, the cell identity and/or the related uplink and/or downlink transmission signal at the time.

13. The method according to claim 1 or 6, wherein after the cell cluster to which the cell belongs is changed, and when a cell identity of the cell is related to the cell cluster to which the cell belongs while related to physical signals sent by the base station and UE of the cell, the method further comprising:
handing over, by the base station of the cell, UE of the cell to another cell; and
changing the cell identity, or changing the cell identity and corresponding system information and/or a common signal.

14. The method according to claim 1 or 6, wherein after the cell cluster to which the cell belongs is changed, and when a cell identity of the cell is related to the cell cluster to which the cell belongs while related to physical signals sent by the base station and UE of the cell, the method further comprising:
stopping, by the base station of the cell, scheduling UE in a part of subframes of the cell;
sending system information and/or a common signal corresponding to the changed cell identity in the part of subframes; and
changing subframes where system information and/or a common signal corresponding to the unchanged cell identity are sent, so that the system information and/or the common signal corresponding to the changed cell identity are/is capable of being sent in all the subframes.

15. The method according to claim 14, wherein,
after sending the system information and/or the common signal corresponding to the changed cell identity in the part of subframes, the method further comprising: scheduling the UE in the subframes where the system information and/or the common signal corresponding to the changed cell identity are sent; or
after changing the subframes where the system information and/or the common signal corresponding to the unchanged cell identity are sent, the method further comprising: scheduling the UE in all the subframes.

16. The method according to claim 14, further comprising:
configuring, by the base station of the cell, the UE to search a cell with a cell identity being changed, and measure the cell with the cell identity being changed by means of subframe pattern; or
handing over, by the base station of the cell, the UE of the cell to the cell with cell identity being changed, or handing over a UE needing to be handed over to the cell with cell identity being changed or other cell according to a measurement result.

17. The method according to claim 16, further comprising:
providing, by the base station of the cell, assistance information to the UE, the assistance information indicating that the UE is capable of using the timing of the cell with the cell identity not being changed, and/or indicating that the UE is capable of handing over to the cell with the cell identity being changed in a random access process by using an original cell radio network temporary identity; or,
the assistance information indicating that the UE is capable of using the timing of the cell with the cell identity not being changed, the UE is capable of handing over to the cell with the cell identity being changed in the random access process by using the original cell radio network temporary identity, and the UE is capable of directly accessing to the cell with the cell identity being changed without performing random access.

18. A method for receiving information, comprising:
receiving, by a UE, indication information sent by a base station of a cell when a cell cluster to which the cell belongs is changed, the indication information indicating that a cell identity and/or a related uplink and/or downlink transmission signal is/are changed; the indication information comprising the changed cell identity, and/or time of changing the cell identity and/or the related uplink and/or downlink transmission signal; and
receiving system information, and/or a common signal, and/or a downlink control signal sent by the base station of the cell, and/or changing a scrambling sequence or a reference signal sequence related to the cell identity in an uplink signal of the UE, by using the changed cell identity at the time indicated by the indication information.

19. A method for receiving information, comprising:
receiving, by a UE being handed over from a cell to another cell, assistance information sent from a base station of the other cell to the UE when a cell cluster to which the cell belongs is changed, the assistance information indicating that the UE is capable of using the timing of the cell with the cell identity not being changed, and/or indicating that the UE is capable of handing over to the cell with the cell identity being changed in a random access process by using an original cell radio network temporary identity; or
the assistance information indicating that the UE is capable of using the timing of the cell with the cell identity not being changed, the UE is capable of handing over to the cell with the cell identity being changed in the random access process by using the original cell radio network temporary identity, and the UE is capable of directly accessing the cell with the cell identity being changed without performing random access.

20. Abase station, comprising:
a processing unit configured to cause a cell to join in a cell cluster, or leave a cell cluster to which the cell belongs, or change a cell cluster to which the cell belongs into another cell cluster, according to indication information received from a network side controller.

21. The base station according to claim 20, further comprising:
an information sending unit configured to send a request message to the network side controller, the request message indicating that the cell requests to join in the cell cluster, or leave a cell cluster to which the cell belongs, or change a cell cluster to which the cell belongs into the other cell cluster.

22. A controller, comprising:
an information sending unit configured to send indication information to a base station of a cell, the indication information indicating the cell to join in a cell cluster, or leave a cell cluster to which the cell belongs, or change a cell cluster to which the cell belongs into another cell cluster.

23. The controller according to claim 22, further comprising:
an information receiving unit configured to receive a request message from the cell, the request message indicating that the cell requests to join in the cell cluster, or leave the cell cluster to which the cell belongs, or change the cell cluster to which the cell belongs into the other cell cluster;
wherein the information sending unit is configured to send the indication information according to the request message.

24. The controller according to claim 22, further comprising:
an information notifying unit configured to notify other cell(s) in the cell cluster to which the cell belongs, that the cell leaves the cell cluster, and/or the cell joins in the cell cluster;
wherein, the cell cluster where the cell is located comprises a cell cluster having been or to be left, and/or a cell cluster joined in by the cell.

25. Abase station, comprising:
a first sending unit configured to send a message to a target cell or an network side controller, the message indicating that a cell of the base station requests to join in and/or leave a cell cluster to which the target cell belongs; wherein, the target cell comprises one or more cell(s) in the cell cluster to be joined in by the cell, and/or other one or more cell(s) in the cell cluster to be left by the cell; and
a first processing unit configured to cause the cell to join in and/or leave the cell cluster to which the target cell belongs, after the message is sent or when a confirmation permission message is received from the target cell.

26. The base station according to claim 25, further comprising:
a second sending unit configured to send a message indicating that a cell cluster to which the cell belongs is changed, to neighbor cell(s) of the cell, or other cell(s) in the cell cluster to which the cell belongs;
the cell cluster to which the cell belongs comprises a cell cluster having been or to be left, and/or a cell cluster joined in by the cell.

27. Abase station, comprising:
a receiving unit configured to receive a message sent by a base station of a cell, the message indicating that the cell requests to join in and/or leave a cell cluster to which the target cell belongs; wherein the target cell comprises one or more cell(s) in the cell cluster to be joined in by the cell, and/or other one or more cell(s) in the cell cluster to be left by the cell.

28. Abase station, comprising:
a first receiving unit configured to receive a message sent by a base station of the cell or a base station of a target cell, the message indicating that a cell cluster to which the cell belongs is changed; wherein the target cell comprises one or more cell(s) in a cell cluster to be joined in by the cell, and/or other one or more cell(s) in a cell cluster to be left by the cell; the cell cluster to which the cell belongs comprises a cell cluster having been or to be left, and/or a cell cluster joined in by the cell; and
a first notifying unit configured to notify the cell of the base station, that the cell leaves and/or joins in the cell cluster, and/or the situation of a change of the cell cluster to which the cell belongs.

29. The base station according to claim 20 or 25, wherein after the cell cluster to which the cell belongs is changed, the base station further comprises:
an information updating unit configured to update an identity of the cell cluster to which the cell belongs.

30. The base station according to claim 20 or 25, wherein after the cell cluster to which the cell belongs is changed, and when a cell identity of the cell is related to the cell cluster to which the cell belongs while related to physical signals sent by the base station and UE of the cell, the base station further comprising:
a third sending unit configured to send an indication message to the UE, the indication message indicating that the cell identity, and/or a related uplink and/or downlink transmission signal is/are changed; the indication message comprising the changed cell identity, and/or time of changing the cell identity and/or the related uplink and/or downlink transmission signal; and
a fourth sending unit configured to change the cell identity and/or the related uplink and/or downlink transmission signal at the time.

31. The base station according to claim 20 or 25, wherein after the cell cluster to which the cell belongs is changed, and when a cell identity of the cell is related to the cell cluster to which the cell belongs while related to physical signals sent by the base station and UE of the cell, the base station further comprising:
a first handover unit configured to hand over the UE of the cell to another cell; and
a first changing unit configured to change the cell identity, or change the cell identity and corresponding system information and/or a common signal.

32. The base station according to claim 20 or 25, wherein after the cell cluster to which the cell belongs is changed, and when a cell identity of the cell is related to the cell cluster to which the cell belongs while related to physical signals sent by the base station and UE of the cell, the base station further comprises:
a first scheduling unit configured to stop scheduling the UE in a part of subframes of the cell;
a fifth sending unit configured to send system information and/or a common signal corresponding to the changed cell identity in the part of subframes; and
a second changing unit configured to change subframes where system information and/or a common signal corresponding to the unchanged cell identity are sent, so that the system information and/or the common signal corresponding to the changed cell identity are/is capable of being sent in all the subframes.

33. The base station according to claim 32, further comprising:
a second scheduling unit configured to schedule the UE in the subframes where the system information and/or the common signal corresponding to the changed cell identity are sent, after the fifth sending unit sends the system information and/or the common signal; and
a third scheduling unit configured to schedule the UE in all the subframes after the second changing unit changes the subframes.

34. The base station according to claim 32, further comprising:
a first configuring unit configured to configure the UE to search a cell with a cell identity being changed, and measure the cell with the cell identity being changed by means of subframe pattern; or
a second hand over unit configured to handover the UE of the cell to the cell with cell identity being changed, or handover a UE needing to be handed over to the cell with the cell identity being changed or other cell according to a measurement result.

35. The base station according to claim 34, further comprising:
an information providing unit configured to provide assistance information to the UE, the assistance information indicating that the UE is capable of using the timing of the cell with the cell identity not being changed, and/or indicating that the UE is capable of handing over to the cell with the cell identity being changed in a random access process by using an original cell radio network temporary identity;
or the assistance information indicating that the UE is capable of using the timing of the cell with the cell identity not being changed, the UE is capable of handing over to the cell with the cell identity being changed in the random access process by using the original cell radio network temporary identity, and the UE is capable of directly accessing the cell with cell identity being changed without performing random access.

36. A UE, comprising:
a second receiving unit configured to receive indication information sent by a base station of a cell when a cell cluster to which the cell belongs is changed, the indication information indicating that a cell identity and/or a related uplink and/or downlink transmission signal is/are changed; the indication information comprising the changed cell identity, and/or time of changing the cell identity and/or the related uplink and/or downlink transmission signal;
a sixth sending unit configured to send system information, and/or a common signal, and/or a downlink control signal sent by the base station of the cell, and/or change a scrambling sequence or a reference signal sequence related to the cell identity in an uplink signal of the UE, by using the changed cell identity at the time indicated by the indication information.

37. A UE, comprising:
a third receiving unit configured to receive assistance information sent from a base station of another cell to the UE when a cell cluster where a cell to which the UE belongs is located is changed and the UE is handed over from the cell to the other cell, the assistance information indicating that the UE is capable of using the timing of the cell with a cell identity not being changed and/or indicating that the UE is capable of handing over to the cell with the cell identity being changed in a random access process by using an original cell radio network temporary identity;
or the assistance information indicating that the UE is capable of using the timing of the cell with the cell identity not being changed, the UE is capable of handing over to the cell with the cell identity being changed in the random access process by using the original cell radio network temporary identity, and the UE is capable of directly accessing the cell with the cell identity being changed without performing random access.

38. A computer readable program, wherein when being executed in a base station, the program enables a computer to carry out the method for changing a cell cluster according to any of claims 1 to 2 and 6 to 17 in the base station.

39. A storage medium which stores a computer readable program, wherein the computer readable program enables a computer to carry out the method for changing a cell cluster according to any of claims 1 to 2 and 6 to 17 in a base station.

40. A computer readable program, wherein when being executed in a UE, the program enables a computer to carry out the method for receiving information according to claim 18 or 19 in the UE.

41. A storage medium which stores a computer readable program, wherein the computer readable program enables a computer to carry out the method for receiving information according to claim 18 or 19 in a UE.

42. A computer readable program, wherein when being executed in a controller, the program enables a computer to carry out the method for changing a cell cluster according to any of claims 3 to 5 in the controller.

43. A storage medium which stores a computer readable program, wherein the computer readable program enables a computer to carry out the method for changing a cell cluster according to any of claims 3 to 5 in a controller.
